# EUROPEAN PATENT APPLICATION

(11) **EP 4 624 386 A1**
(43) Date of publication of application: **01.10.2025**
(21) Application number: 23909017.8
(22) Date of filing: 15.06.2023
(51) Int. Cl.: B65G 47/90

(54) **BATTERY CELL TRANSFER DEVICE**

(30) Priority: 30.12.2022 CN 202211720013; 14.03.2023 CN 202310305915
(71) Applicant: Shenzhen Herunda Technology Co., Ltd., Shenzhen, Guangdong 518107 (CN)
(72) Inventor: LI, Dongsheng, Shenzhen, Guangdong 518107 (CN); HUA, Lin, Shenzhen, Guangdong 518107 (CN); LI, Hao, Shenzhen, Guangdong 518107 (CN)
(74) Representative: Petraz, Gilberto Luigi
(86) International application number: PCT/CN2023/100391
(87) International publication number: WO 2024/139071

(57) **Abstract**

The present invention discloses a battery cell transfer device, including a movable frame, where an interior of the movable frame is provided with a cargo platform, the cargo platform is installed inside the movable frame and is movable in a Z-axis direction; a gripping device, including a gripping frame, a jaw assembly, and a first drive assembly, the jaw assembly including a gripping frame, a mounting frame, and a plurality of gripping members, the gripping frame is installed on the cargo platform and is movable in an X-axis direction; the mounting frame is installed on the gripping frame and is movable in the Z-axis direction; each of the plurality of gripping members includes two gripping arms, an end of each of the two gripping arms is formed as a linkage end, an opposite end of each of the two gripping arms is formed as a gripping end, the two gripping arms are rotatably mounted on the gripping frame via a first pivot shaft; the linkage end is configured to drive the two gripping ends away from or close to each other when pressed; a plurality of pressing rods are provided on the mounting frame, the plurality of pressing rods are arranged in one-to-one correspondence with the plurality of gripping members; each of the plurality of pressing rods is connected to the linkage end and is configured to press the linkage end when the mounting frame moves downward; the first drive assembly is configured to drive the mounting frame to move in the Z-axis direction. The present invention achieves movement of multiple gripping members to grip a plurality of battery cells simultaneously in a single operation.

## Description

### TECHNICAL FIELD

The present invention relates to a battery cell transfer device.

### BACKGROUND

At present, a lithium-ion battery cell refers to a single electrochemical cell containing positive and negative electrodes, which is generally not used directly. This differs from battery packs containing protection circuits and casings that can be used directly. The composition of a lithium-ion rechargeable cell is as follows: cell + protection circuit board. During the formation and capacity grading process stage of lithium cells, battery cells are carried on pallets and transported via Rail Guided Vehicles (RGVs). Movement in X/Y/Z directions achieves pallet and cell transfer, or the gripping device can be installed above a press bed to form a horizontal crane layout.

In the prior art, a single-group transfer device employs independently operated jaws in its soft-pack battery cell gripping mechanism. This results in low synchronization, significantly reducing precision and speed during cell handling operations, while correspondingly increasing failure rates. Additionally, as battery cells are typically stored in cell cabinets, transfer devices require height adjustments to accommodate different cabinet dimensions, complicating operational procedures.

### SUMMARY

To overcome the deficiencies of the prior art, the present invention aims to provide a battery cell transfer device. By vertically moving the cargo platform on the movable frame and enabling forward/backward movement of the gripping frame on the gripping device, simultaneous movement of multiple gripping members is achieved. This allows gripping multiple cells in a single operation, significantly improving transfer efficiency.

An objective of the present invention is implemented through the following technical solution:
A battery cell transfer device includes:
a movable frame, where an interior of the movable frame is provided with a cargo platform, the cargo platform is installed inside the movable frame and is movable in a Z-axis direction;
a gripping device, including a gripping frame, a jaw assembly, and a first drive assembly, the jaw assembly including a gripping frame, a mounting frame, and a plurality of gripping members, the gripping frame is installed on the cargo platform and is movable in an X-axis direction; the mounting frame is installed on the gripping frame and is movable in the Z-axis direction; each of the plurality of gripping members includes two gripping arms, an end of each of the two gripping arms is formed as a linkage end, an opposite end of each of the two gripping arms is formed as a gripping end, the two gripping arms are rotatably mounted on the gripping frame via a first pivot shaft; the linkage end is configured to drive the two gripping ends away from or close to each other when pressed; a plurality of pressing rods are provided on the mounting frame, the plurality of pressing rods are arranged in one-to-one correspondence with the plurality of gripping members; each of the plurality of pressing rods is connected to the linkage end and is configured to press the linkage end when the mounting frame moves downward; the first drive assembly is configured to drive the mounting frame to move in the Z-axis direction.

Further, the gripping member further includes a mounting base, a mounting cavity is provided in the mounting base, the mounting cavity extends to a top end and a bottom end of the mounting base; the two gripping arms are rotatably mounted in the mounting cavity via a first pivot shaft; the gripping end protrudes out of the bottom end of the mounting cavity; each of the plurality of pressing rod is arranged in one-to-one correspondence with each mounting base; and the pressing rod is configured to extend into the mounting cavity and press the linkage end after moving downward.

Further, the gripping member includes an elastic member, an end of the elastic member abuts against the first pivot shaft; an opposite end of the elastic member is connected to the linkage end; the linkage end is configured to press the elastic member when pressed by the pressing rod; the elastic member is configured to provide an elastic stress that urges the linkage end to rotate upward.

Further, the gripping member further includes two connecting arms, the two connecting arms are pivotally connected to each other via a second pivot shaft; one connecting arm is pivotally connected to one of the linkage ends, and the other connecting arm is pivotally connected to the other of the linkage ends; the pressing rod is configured to press the second pivot shaft.

Further, the first drive assembly includes a drive member, a drive seat, and a drive wheel, the drive member is configured to drive the drive seat to move in a Y-axis direction; a guide seat is provided at a bottom end of the drive seat; the drive wheel is pivotally connected to a top end of the mounting frame; the guide seat is configured to rollingly cooperate with the drive wheel when the drive seat moves in the Y-axis direction, so as to guide the mounting frame to move in the Z-axis direction; a guide slope is provided at a bottom end of the guide seat; the guide slope is configured to rollingly cooperate with the drive wheel when the drive seat moves in the Y-axis direction, so as to guide the mounting frame to move in the Z-axis direction.

Further, the battery cell transfer device further includes a bottom supporting assembly, a second drive assembly, and a third drive assembly; the bottom supporting assembly includes a bottom supporting frame and bottom supporting mechanisms; the bottom supporting frame is installed on the gripping frame and is movable in the Z-axis direction; a bottom supporting cavity is provided inside the bottom supporting frame; the bottom supporting cavity extends to a top end and a bottom end of the bottom supporting frame; the bottom supporting mechanisms are provided on both sides of the bottom supporting cavity; each bottom supporting mechanism includes a bottom supporting plate and a plurality of partition plates, the plurality of partition plates are fixedly connected to the bottom supporting plate; a bottom supporting interval is formed by a space between every two adjacent partition plates; the bottom supporting plates of the two bottom supporting mechanisms are slidably mounted on the bottom supporting frame and are movable close to or away from each other; the second drive assembly is installed on the gripping frame; the second drive assembly is configured to drive the bottom supporting frame to move in the Z-axis direction; the third drive assembly is installed on the bottom supporting frame; the third drive assembly is configured to drive the bottom supporting plate to move.

Further, an end of the partition plate is formed as a fixed end, an opposite end of the partition plate is formed as a guide end, the fixed end is fixedly connected to the bottom supporting plate, the guide end is provided with a guide slope, and the guide slope gradually inclines outward from a portion close to the fixed end to a portion away from the fixed end.

Further, the second drive assembly includes a drive member and a linkage mechanism, the linkage mechanism includes a connecting seat, a first driving arm, and a second driving arm, the connecting seat is slidably mounted on the gripping frame; the drive member is configured to drive the connecting seat to slide in a Y-axis direction; the first driving arm and the second driving arm are cross-hinged; an end of the first driving arm is hinged to the connecting seat, an opposite end of the first driving arm is hinged to the bottom supporting frame; an end of the second driving arm is hinged to the gripping frame, an opposite end of the second driving arm is hinged to the bottom supporting frame and is slidable in the Y-axis direction.

Further, two linkage mechanisms are provided; the drive member comprises a drive motor, a lead screw, a first nut, and a second nut, the lead screw is arranged along the Y-axis direction; the lead screw has a first threaded section and a second threaded section, the first threaded section and the second threaded section have opposite thread directions; the first nut is threadedly sleeved on the first threaded section and is connected to the connecting seat of one linkage mechanism; the second nut is threadedly sleeved on the second threaded section and is connected to the connecting seat of the other linkage mechanism.

Further, the battery cell transfer device further includes a movable track, the movable track extends along the Y-axis direction, and the movable frame is slidably mounted on the movable track.

Further, the battery cell transfer device further includes a fourth drive assembly, a guide rail is provided on the gripping frame, a guide groove is provided on the cargo platform, the guide rail is slidably inserted in the guide groove; the fourth drive assembly is configured to drive the guide rail to slide relative to the guide groove.

Compared with the prior art, the beneficial effects of the invention lie in:
The movable frame can move to a battery cell cabinet. Through vertical movement of the cargo platform inside the movable frame, the cargo platform can be positioned opposite upper or lower layers of the battery cell cabinet. After aligning with different cell positions across cabinet layers, forward/backward movement of the gripping frame on the gripping device enables precise alignment at various locations within the cabinet. Additionally, during gripping operations, synchronized opening and closing of multiple gripping members is achieved via vertical motion of the mounting frame driven by the first drive assembly. This allows simultaneous gripping of multiple battery cells in a single action, significantly improving gripping and transfer efficiency.

### BRIEF DESCRIPTION OF THE DRAWINGS

FIG. 1 is a schematic structural view of the invention;
FIG. 2 is a schematic structural view of the cargo platform and gripping device of the invention;
FIG. 3 is another schematic structural view of the cargo platform and gripping device of the invention;
FIG. 4 is a schematic structural view of the bottom supporting assembly of the invention;
FIG. 5 is a schematic structural view of the gripping device of the invention;
FIG. 6 is a schematic structural view of the jaw assembly of the invention.

In the drawings: 10, movable frame; 11, electric wheel; 20, cargo platform; 21, third motor; 22, fourth gear; 23, rack; 24, guide rail; 30, gripping device; 31, gripping frame; 331, drive motor; 332, lead screw; 333, connecting seat; 334, first driving arm; 335, second driving arm; 336, drive seat; 337, guide seat; 338, guide slope; 339, drive wheel; 34, mounting frame; 341, pressing rod; 342, elastic member; 35, gripping member; 351, gripping arm; 352, connecting arm; 353, mounting base; 40, bottom supporting assembly; 41, bottom supporting frame; 411, bottom supporting cavity; 42, bottom supporting plate; 43, partition plate; 431, guide end; 432, bottom supporting interval; 441, first motor; 442, transmission shaft; 443, first gear; 444, second gear; 445, third gear; 446, first rack; 50, movable track.

### DETAILED DESCRIPTION

With reference to the drawings and specific implementations, the invention is further described in below:
In the description of the present invention, it is to be noted that the terms "up", "down", "front", "back", "left", "right", "vertical", "horizontal", "top", "bottom", "inside", "outside" and other orientation or position relationships are based on the orientation or position relationships shown in the attached drawings. It is only intended to facilitate description of the present disclosure and simplify description, but not to indicate or imply that the referred device or element has a specific orientation, or is constructed and operated in a specific orientation. Therefore, they should not be construed as a limitation of the present invention.

Unless otherwise defined, all terms including technical and scientific terms used herein have the same meaning as commonly understood by those skilled in the art to which the present disclosure belongs. The terms used herein in the specification of the present invention are used only to describe specific embodiments and are not intended as a limitation of the invention.

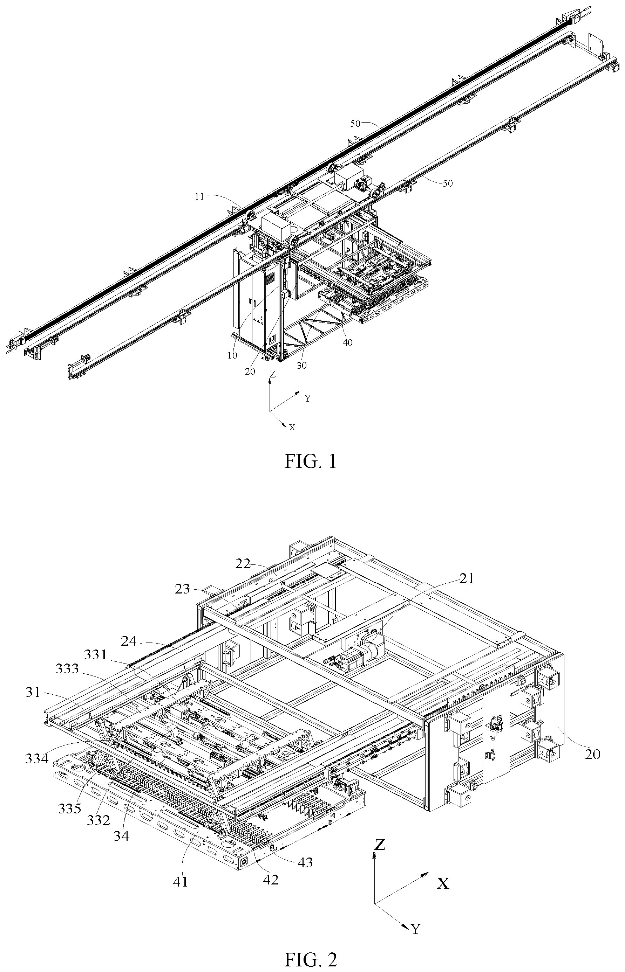

As shown in FIGS. 1-6, a battery cell transfer device includes a movable frame 10 and a gripping device 30. A cargo platform 20 is movably installed within the movable frame 10. The cargo platform 20 is movable in the Z-axis direction, meaning it moves vertically along the height direction of the movable frame 10 to achieve upward and downward motion.

The gripping device 30 includes a gripping frame 31, a jaw assembly, and a first drive assembly. The jaw assembly includes the gripping frame 31, a mounting frame 34, and a plurality of gripping members 35. The gripping frame 31 is installed on the cargo platform 20 and is movable in the X-axis direction, enabling forward or backward movement relative to the cargo platform 20. During this movement, the gripping frame 31 may extend beyond or retract into the movable frame 10.

Specifically, the mounting frame 34 is installed on the gripping frame 31. Driven by a second drive assembly, the mounting frame 34 moves vertically in the Z-axis direction along the height dimension of the gripping frame 31. Each of the plurality of gripping member 35 includes two gripping arms 351. The two gripping arms 351 are cross-hinged via a first pivot shaft, thereby establishing a rotational connection at mid-sections of the two gripping arms 351 to enable relative pivoting motion of the two gripping arms 351. Specifically, an end of each of the plurality of gripping arm 351 is formed as a linkage end, an opposite end of each of the plurality of gripping arm 351 functions as a gripping end. When subjected to downward force, the linkage end drives the two gripping ends to move either away from or toward each other.

Furthermore, a plurality of pressing rods 341 are mounted on the mounting frame 34. The plurality of pressing rods 341 are arranged in one-to-one correspondence with the plurality of gripping members 35. Each of the plurality of pressing rods 341 connects to the linkage end of its corresponding gripping arm 351 and presses down on the linkage end when the mounting frame 34 moves downward. Admittedly, during upward movement of the plurality of pressing rods 341, the linkage end is simultaneously pulled upward.

On the basis of the above structure, during operation of the battery cell gripping device 30 of the present invention:
The movable frame 10 moves to a battery cell cabinet. Through vertical movement of the cargo platform 20 within the movable frame 10, the cargo platform 20 aligns with either upper or lower layers of the cabinet. After positioning at different cell storage levels, forward movement of the gripping frame 31 of the gripping device 30 extends it into the cabinet beyond the cargo platform 20.

In the initial state, the plurality of pressing rods 341 on the mounting frame 34 remain disengaged from the linkage ends of the plurality of gripping members 35. At this stage, the gripping ends of both gripping arms 351 in each of the plurality of gripping members 35 maintain a closed position. During battery cell gripping, the first drive assembly drives the mounting frame 34 downward. Consequently, all pressing rods 341 connected to the mounting frame 34 simultaneously descend. Since each of the plurality of pressing rods 341 corresponds to a linkage end of each of the plurality of gripping members 35, downward pressure forces the linkage ends to rotate downward. This rotational motion causes the gripping ends of the gripping arms 351 to open outward, creating insertion space between the gripping ends for cell placement.

Subsequently, the first drive assembly retracts the mounting frame 34 to its initial position. As the plurality of pressing rods 341 reset upward, the linkage ends correspondingly return upward, completing the clamping action. Thus, the plurality of gripping members 35 achieve synchronous opening and closing via vertical motion of the mounting frame 34 driven by the first drive assembly, completing gripping of multiple battery cells in a single operation to improve battery cell gripping and transfer efficiency.

Admittedly, after all gripping members 35 have gripped the battery cells, the gripping frame 31 retracts rearward relative to the cargo platform 20 into the movable frame 10. Subsequently, the movable frame 10 moves to the next workstation.

Further, in the present embodiment, each of the plurality of gripping members 35 additionally includes a mounting base 353. A mounting cavity is formed within the mounting base 353, specifically extending through both the top and bottom end faces of the mounting base 353. The two gripping arms 351 are rotatably mounted within this mounting cavity via the first pivot shaft, with their gripping ends protruding from the cavity's bottom end. Each of the plurality of pressing rod 341 corresponds to a respective mounting base 353, and moves downward to extend into the mounting cavity to press against the linkage end.

Based on this structure, the two gripping arms 351 of each of the plurality of gripping member 35 employ the mounting cavity of the mounting base 353 as their installation foundation. During opening operation, each of the plurality of pressing rod 341 extends into the mounting cavity of the mounting base 353 driven by the mounting frame 34, presses the linkage end of the gripping arm 351 downward, and the linkage end rotates downward to drive the corresponding gripping end to open. Since both pressing and reset actions of the gripping arm 351 occur within the mounting cavity of the mounting base 353, external force interference is prevented.

More specifically, the gripping member 35 includes an elastic member 342. An end of the elastic member 342 abuts against the first pivot shaft, and an opposite end of the elastic member 342 connects to the linkage end. Specifically, the linkage end presses the elastic member 342 when pressed by the pressing rod 341. Thus, the pressing rod 341 resets upward and disengages from the linkage end when the first drive assembly drives the mounting frame 34 upward. The elastic member 342 then resets and provides an elastic stress. This elastic stress forces the linkage end to rotate upward, causing the corresponding gripping ends to move close to each other to clamp.

On one hand, the elastic stress provided by the elastic member 342 enables rapid clamping of the gripping ends. On the other hand, after clamping, the elastic stress maintains an upward rotational tendency of the linkage end, ensuring that the gripping ends remain in a clamped state, thereby reducing incidents of battery cell dropping after gripping. Moreover, as the elastic stress provides resilient force, it introduces certain compliance compared to direct mechanical force application, mitigating damage to battery cells during gripping operations.

More specifically, to facilitate synchronized movement of the linkage ends of the two gripping arms 351, each of the plurality of gripping members 35 further includes two connecting arms 352. The two connecting arms 352 are pivotally connected to each other via a second pivot shaft. One connecting arm 352 is pivotally connected to one linkage end, and the other connecting arm 352 is pivotally connected to the other linkage end. The pressing rod 341 is configured to press the second pivot shaft. Thus, the mounting frame 34 drives the pressing rod 341 to move downward when the mounting frame 34 moves downward. The pressing rod 341 presses the second pivot shaft of the two connecting arms 352 downward. The second pivot shaft moves downward, driving the two connecting arms 352 downward and pulling the linkage ends of the gripping arms 351 to rotate downward, thereby causing the gripping ends of the gripping arms 351 to move close to each other to complete clamping.

Based on this structure, the pressing rod 341 connects to the second pivot shaft. The pressing rod 341 presses the second pivot shaft downward when the pressing rod 341 moves downward; the rod pulls the second pivot shaft upward to perform the clamping action when the pressing rod 341 moves upward.

Further, the first drive assembly includes a drive member, a drive seat 336, and a drive wheel 339. The drive member drives the drive seat 336 to move horizontally. A guide seat 337 is provided at a bottom end of the drive seat 336. The drive wheel 339 is pivotally connected to a top end of the mounting frame 34. The guide seat 337 rollingly cooperates with the drive wheel 339 during horizontal movement of the drive seat 336 to guide motion of the mounting frame 34 along the height direction of the gripping frame 31.

Thus, the drive member drives the drive seat 336 to move linearly horizontally when driving the mounting frame 34 downward. During this process, the guide seat 337 rollingly cooperates with the drive wheel 339 to press down against the drive wheel 339, thereby driving the mounting frame 34 connected to the drive wheel 339 downward.

When employing this drive structure, the elastic member 342 configured as indicated above is able to drive the pressing rod 341 to reset upward.

More specifically, a guide slope 338 is provided at the bottom end of the guide seat 337. The guide slope 338 rollingly cooperates with the drive wheel 339 during horizontal movement of the drive seat 336 to guide motion of the mounting frame 34 along the height direction of the gripping frame 31. Thus, during horizontal movement of the drive seat 336, the guide slope 338 decomposes horizontal force into vertical force to press down against the drive wheel 339, achieving downward drive of the mounting frame 34.

It should be noted that the present embodiment converts horizontal driving force into vertical up or down motion, eliminating large vertical travel requirements and reducing the overall height of the gripping device 30.

Admittedly, the guide seat 337 may alternatively adopt a curved surface structure or spherical surface structure. Through force application points on curved or spherical surfaces, horizontal force is similarly decomposed into vertical force to achieve upward motion of the mounting frame 34.

Further, multiple sets of the jaw assembly are provided.

When adopting the drive method employing the drive member, drive seat 336, and drive wheel 339 for the first drive assembly, drive wheels 339 can be installed on the mounting frames 34 of multiple jaw assemblies. Multiple guide seats 337 arranged on the drive seat 336 slidably cooperate with the drive wheels 339, enabling a single drive member to simultaneously operate multiple jaw assemblies for synchronized opening or closing, thereby enhancing gripping efficiency.

In the present embodiment, the battery cell transfer device further includes a bottom supporting assembly 40, a second drive assembly, and a third drive assembly. The bottom supporting assembly 40 includes a bottom supporting frame 41 and bottom supporting mechanisms. The bottom supporting frame 41 is installed on the gripping frame 31 and is movable in the Z-axis direction, meaning the bottom supporting frame 41 moves vertically along the height direction of the gripping frame 31. The second drive assembly is installed on the gripping frame 31 and drives vertical motion of the bottom supporting frame 41 along the height direction of the gripping frame 31.

Additionally, a bottom supporting cavity 411 is formed within the bottom supporting frame 41. The bottom supporting cavity 411 extends through both the top and bottom ends of the bottom supporting frame 41, with bottom supporting mechanisms provided on both sides of the bottom supporting cavity 411. Each bottom supporting mechanism includes a bottom supporting plate 42 and multiple partition plates 43. The partition plates 43 are fixedly connected to the bottom supporting plate 42, and adjacent partition plates 43 form bottom supporting intervals 432 between them. The bottom supporting plates 42 of both mechanisms are slidably mounted on the bottom supporting frame 41 and move toward or away from each other. The third drive assembly is installed on the bottom supporting frame 41 and drives motion of the bottom supporting plates 42.

During gripping operations, the second drive assembly drives the bottom supporting frame 41 to move upward. In the initial state, the bottom supporting mechanisms on both sides of the bottom supporting cavity 411 remain separated. As the second drive assembly drives the bottom supporting frame 41 upward, the plurality of gripping members 35 extend downward through the bottom supporting cavity 411 during this upward motion. After full extension, the plurality of gripping members 35 complete cell gripping.

Subsequently, the second drive assembly drives the bottom supporting frame 41 downward. During descent, the bottom supporting frame 41 moves downward relative to the battery cells. At this stage, the bottom supporting mechanisms on both sides of the bottom supporting cavity 411 move close to each other when driven by the third drive assembly.

Specifically, the third drive assembly drives the bottom supporting plates 42 of the bottom supporting mechanisms toward each other. During the approaching of the bottom supporting plates 42, the partition plates 43 on the plates 42 approach each other. The bottom supporting interval 432 between adjacent partition plates 43 accommodates lateral insertion of lateral sides of cells, while bottoms of cells become supported by the bottom supporting plates 42. This completes bottom support of cells, preventing accidental drops during gripping transfer of cells and ensuring stable gripping transfer of cells.

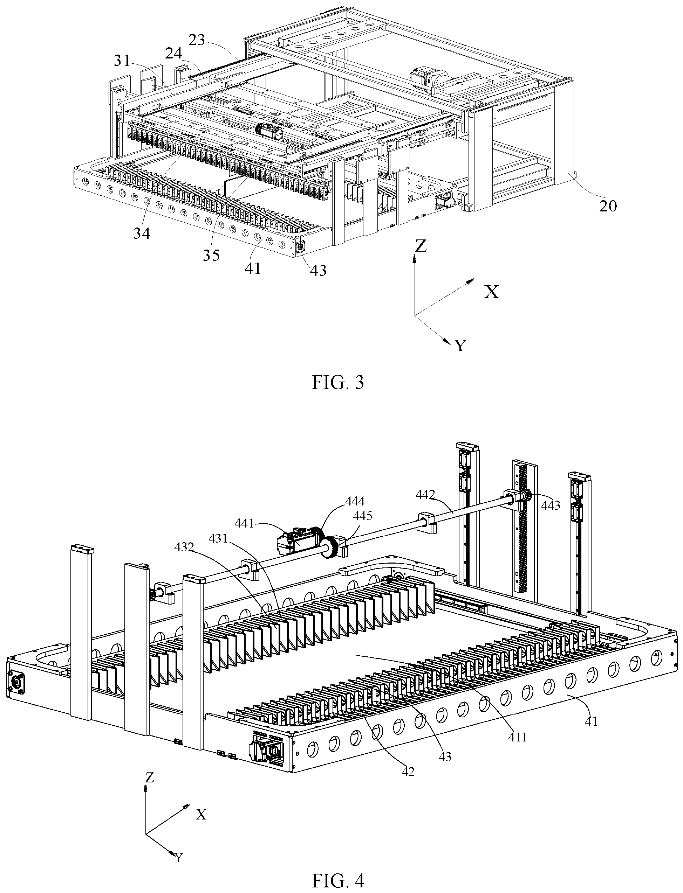

Further, specific structural details of the second drive assembly in the present embodiment are shown in FIG. 4. The second drive assembly includes a first motor 441, a transmission shaft 442, a first gear 443, and a first rack 446. The first rack 446 is mounted on the bottom supporting frame 41 and extends along the height direction of the support frame. The first motor 441 is installed on the support frame and synchronously coupled to the transmission shaft 442. The first gear 443 connects to the end of the transmission shaft 442 and engages with the first rack 446.

On the basis of the above structure, vertical movement of the bottom supporting frame 41 operates as follows: The first motor 441 rotates its output shaft to drive the first gear 443, the rotation of the first gear 443 engages with the first rack 446 for transmission. During engagement between the first gear 443 and the first rack 446, the first rack 446 moves vertically along its longitudinal axis. This motion vertically displaces the connected bottom supporting frame 41. Since the vertical motion of the bottom supporting frame 41 is achieved through tooth groove meshing between the first gear 443 and the first rack 446, stroke control of the vertical motion is more easily achieved and precision is higher.

More specifically, a second gear 444 is connected to the output shaft of the first motor 441. A third gear 445 is provided on the transmission shaft 442. The second gear 444 meshes with the third gear 445. Thus, rotation of the first motor's output shaft drives the connected second gear 444 to rotate. The rotating second gear 444 drives the third gear 445 connected to the transmission shaft 442. Rotation of the third gear 445 drives the transmission shaft 442 to rotate, thereby driving the first gear 443 to rotate. Rotation of the first gear 443 consequently drives vertical movement of the first rack 446. Transmission via gear meshing provides more stable rotation of the transmission shaft 442 compared to direct motor shaft coupling, effectively preventing slippage.

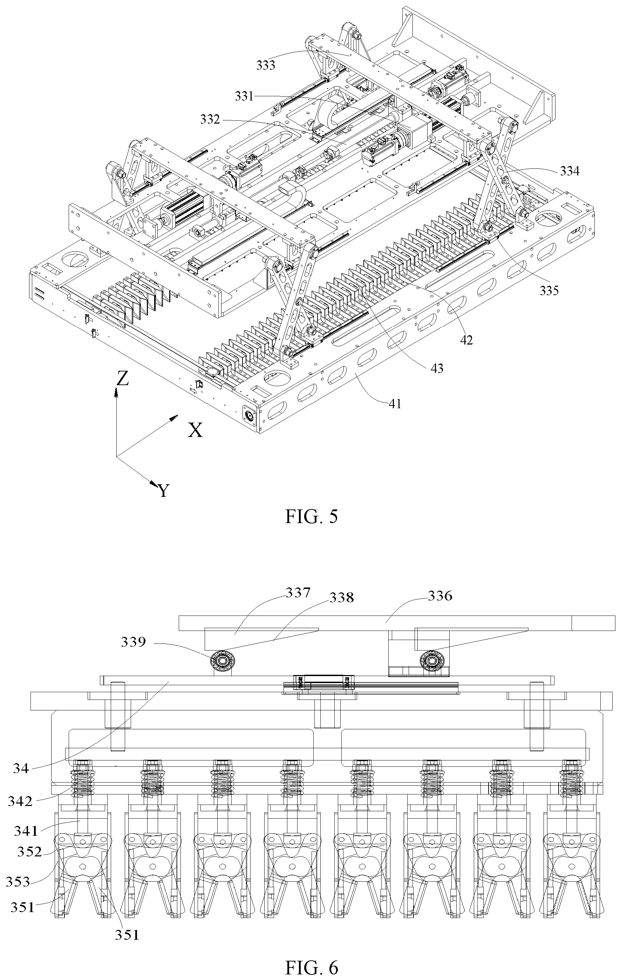

Admittedly, the second drive assembly may alternatively employ another structure. Specifically, referring to FIG. 5, the second drive assembly includes a drive member and a linkage mechanism. In the present embodiment, the linkage mechanism includes a connecting seat 333, a first driving arm 334, and a second driving arm 335. The connecting seat 333 is slidably mounted on the gripping frame 31. Similarly, the drive member drives the connecting seat 333 to slide horizontally. The first driving arm 334 and second driving arm 335 are cross-hinged. An end of the first driving arm 334 is hinged to the connecting seat 333, while an opposite end of the first driving arm 334 is hinged to the bottom supporting frame 41. An end of the second driving arm 335 is hinged to the gripping frame 31, and an opposite end of the second driving arm 335 is hinged to the bottom supporting frame 41 while being slidable along the horizontal direction.

To achieve vertical movement of the bottom supporting frame 41, the drive member drives the connecting seat 333 to slide horizontally. This motion displaces the first driving arm 334 hinged to the seat. During sliding, since the gripping frame 31 is unable to move vertically, the first driving arm 334 pivots horizontally. This pivoting action opens or closes relative to the second driving arm 335. With the second driving arm 335 slidably connected to the bottom supporting frame 41, the relative rotation between both arms pulls the frame vertically.

More specifically, two such linkage mechanisms are implemented in the present embodiment. The drive member includes a drive motor 331, a lead screw 332, a first nut, and a second nut. The lead screw 332 extends horizontally and contains two threaded sections with opposite thread directions. The first nut is threadedly engaged with the first threaded section and connects to the connecting seat 333 of one linkage mechanism. The second nut engages with the second threaded section and connects to the connecting seat 333 of the other linkage mechanism.

Thus, rotation of the drive motor 331's output shaft drives rotation of the lead screw 332. The first threaded section and second threaded section of the lead screw 332 rotate synchronously. The two connecting seats 333 respectively threadedly engage the first threaded section and second threaded section with opposite thread directions via nuts. Consequently, during rotation of the same lead screw 332, sliding of the two connecting seats 333 is achieved, realizing relative rotation of the corresponding first driving arm 334 and second driving arm 335. The second driving arms 335 of both linkage mechanisms are slidably connected to the bottom supporting frame 41. Using two sets of linkage mechanisms achieves vertical motion of the bottom supporting frame 41, making the vertical motion more stable.

Admittedly, the present embodiment employs the first driving arm 334 and second driving arm 335 to form a scissor-lift structure. This eliminates the need for substantial lifting space and reduces the drive's spatial occupation.

It should be noted that the second drive assembly may alternatively be directly selected from linear motion output structures in the prior art, such as electric slides, lead screw transmission mechanisms, or cylinders.

Further, the third drive assembly includes a second motor, a timing belt, and two timing pulleys. The two timing pulleys are pivotally connected to both sides of the bottom supporting frame 41. The timing belt is wound around both timing pulleys. The output shaft of the second motor is coupled to one timing pulley, enabling it to drive that timing pulley. The other pulley then rotates synchronously via the timing belt.

As the timing belt is wound around between the timing pulleys, the intermediate sections between two timing pulleys form upper and lower horizontal transmission segments. An end of one bottom supporting plate 42 connects to the upper horizontal segment; and an end of the other bottom supporting plate 42 connects to the lower horizontal segment.

When achieving mutual proximity or separation of the two bottom supporting plates 42, the second motor drives the timing pulley to rotate. The upper and lower horizontal transmission segments of the timing belt respectively drive the two bottom supporting plates 42 toward or away from each other. This requires only adjusting the rotation direction of the second motor's output shaft.

Similarly, the third drive assembly may alternatively employ two cylinders or two electric slides from the prior art, etc., to respectively drive the two bottom supporting plates 42 toward or away from each other.

Further, to enhance stability during mutual proximity or separation of the two bottom supporting plates 42, a slider may be provided at the end of each bottom supporting plate 42. A slide rail is provided on the bottom supporting frame 41. The slider slidably cooperates with the slide rail. During plate movement, the bottom supporting plate 42 is guided through slider-rail cooperation to move stably.

Further, in the present embodiment, an end of the partition plate 43 is formed as a fixed end, while the other end of the partition plate 43 is formed as a guide end 431. The fixed end is fixedly connected to the bottom supporting plate 42. The guide end 431 is provided with a guide slope. Specifically, the guide slope gradually inclines outward from a portion near the fixed end to a portion away from the fixed end. Since adjacent partition plates 43 have guide slopes on their guide ends 431, the inlet of the bottom supporting interval 432 is formed by cooperating guide slopes. These cooperating guide slopes form a tapered inlet opening with decreasing inner diameter from outer to inner regions. Consequently, during plate convergence, the guide slopes gradually guide the battery cell inward while tightening during insertion, ensuring stable support on the bottom supporting plates 42.

Further, the fixed end may be fixed to the bottom supporting plate 42 via bolts. Thus, the partition plate 43 can be detachably mounted on the bottom supporting plate 42 via bolts, facilitating adjustment of the interval between adjacent partition plates 43 to match bottom supporting actions for cells of different thicknesses.

Further, the battery cell transfer device additionally comprises a movable track 50. The movable track 50 extends along the Y-axis direction. Specifically, multiple battery cell cabinets may be distributed along both sides of the movable track 50. The movable frame 10 is slidably mounted on the movable track 50. Thus, the movable frame 10 slides along the movable track 50 to move left/right laterally. That is, the movable frame 10 moves between different battery cell cabinets distributed along the movable track 50. After moving to the corresponding battery cell cabinet, the cargo platform 20 inside the movable frame 10 moves up/down vertically. After aligning with battery cells on different layers of the single cabinet, the gripping frame on the cargo platform 20 extends relative to the cargo platform 20 into the battery cell cabinet. The second drive assembly activates to drive multiple gripping members 35 to complete gripping of multiple battery cells.

That is, the gripping device 30 is able to move left/right laterally driven by the movable frame 10 to move between different battery cell cabinets; simultaneously, it moves up/down vertically driven by the cargo platform 20 to align with different layers of the battery cell cabinet. The gripping frame 31 moves forward/backward to achieve battery cell pickup/release. Thus, battery cells at different positions are handled through three-dimensional movement.

Further, the battery cell transfer device further includes a fourth drive assembly. A guide rail 24 is provided on the gripping frame 31. Correspondingly, a guide groove is provided on the cargo platform 20. The guide rail 24 is slidably inserted into the guide groove. The fourth drive assembly drives sliding of the guide rail 24 relative to the guide groove. Thus, during gripping operations, the fourth drive assembly drives the gripping frame 31 to move along the cargo platform 20, extending or retracting the gripping frame 31.

In the present embodiment, the fourth drive assembly includes a third motor 21, a fourth gear 22, and a second rack 23. The second rack 23 meshes with the fourth gear 22. The fourth gear 22 connects to the output shaft of the third motor 21. Rotation of the motor shaft drives the fourth gear 22 to rotate, which drives the meshing second rack 23 forward or backward. The second rack 23 is installed on the side of the gripping frame 31. Thus, forward/backward movement of the second rack 23 drives corresponding forward/backward movement of the gripping frame 31. Simultaneously, sliding between the guide rail 24 and guide groove restricts the gripping frame 31 to stable linear motion.

For those of ordinary skill in the art, various other modifications and variations may be made according to the technical solutions and ideas mentioned above, and all these modifications and variations should belong to the scope of protection of the claims of the present disclosure.

## Claims

1. A battery cell transfer device, comprising:
a movable frame, wherein an interior of the movable frame is provided with a cargo platform, the cargo platform is installed inside the movable frame and is movable in a Z-axis direction;
a gripping device, comprising a gripping frame, a jaw assembly, and a first drive assembly, the jaw assembly comprising a gripping frame, a mounting frame, and a plurality of gripping members, the gripping frame is installed on the cargo platform and is movable in an X-axis direction; the mounting frame is installed on the gripping frame and is movable in the Z-axis direction; each of the plurality of gripping members comprises two gripping arms, an end of each of the two gripping arms is formed as a linkage end, an opposite end of each of the two gripping arms is formed as a gripping end, the two gripping arms are rotatably mounted on the gripping frame via a first pivot shaft; the linkage end is configured to drive the two gripping ends away from or close to each other when pressed; a plurality of pressing rods are provided on the mounting frame, the plurality of pressing rods are arranged in one-to-one correspondence with the plurality of gripping members; each of the plurality of pressing rods is connected to the linkage end and is configured to press the linkage end when the mounting frame moves downward; the first drive assembly is configured to drive the mounting frame to move in the Z-axis direction.

2. The battery cell transfer device according to claim 1, wherein the gripping member further comprises a mounting base, a mounting cavity is provided in the mounting base, the mounting cavity extends to a top end and a bottom end of the mounting base; the two gripping arms are rotatably mounted in the mounting cavity via a first pivot shaft; the gripping end protrudes out of the bottom end of the mounting cavity; each of the plurality of pressing rod is arranged in one-to-one correspondence with each mounting base; and the pressing rod is configured to extend into the mounting cavity and press the linkage end after moving downward.

3. The battery cell transfer device according to claim 2, wherein the gripping member comprises an elastic member, an end of the elastic member abuts against the first pivot shaft; an opposite end of the elastic member is connected to the linkage end; the linkage end is configured to press the elastic member when pressed by the pressing rod; the elastic member is configured to provide an elastic stress that urges the linkage end to rotate upward.

4. The battery cell transfer device according to claim 1, wherein the gripping member further comprises two connecting arms, the two connecting arms are pivotally connected to each other via a second pivot shaft; one connecting arm is pivotally connected to one of the linkage ends, and the other connecting arm is pivotally connected to the other of the linkage ends; the pressing rod is configured to press the second pivot shaft.

5. The battery cell transfer device according to claim 1, wherein the first drive assembly comprises a drive member, a drive seat, and a drive wheel, the drive member is configured to drive the drive seat to move in a Y-axis direction; a guide seat is provided at a bottom end of the drive seat; the drive wheel is pivotally connected to a top end of the mounting frame; the guide seat is configured to rollingly cooperate with the drive wheel when the drive seat moves in the Y-axis direction, so as to guide the mounting frame to move in the Z-axis direction; a guide slope is provided at a bottom end of the guide seat; the guide slope is configured to rollingly cooperate with the drive wheel when the drive seat moves in the Y-axis direction, so as to guide the mounting frame to move in the Z-axis direction.

6. The battery cell transfer device according to any one of claims 1 to 5, wherein the battery cell transfer device further comprises a bottom supporting assembly, a second drive assembly, and a third drive assembly; the bottom supporting assembly comprises a bottom supporting frame and bottom supporting mechanisms; the bottom supporting frame is installed on the gripping frame and is movable in the Z-axis direction; a bottom supporting cavity is provided inside the bottom supporting frame; the bottom supporting cavity extends to a top end and a bottom end of the bottom supporting frame; the bottom supporting mechanisms are provided on both sides of the bottom supporting cavity; each bottom supporting mechanism comprises a bottom supporting plate and a plurality of partition plates, the plurality of partition plates are fixedly connected to the bottom supporting plate; a bottom supporting interval is formed by a space between every two adjacent partition plates; the bottom supporting plates of the two bottom supporting mechanisms are slidably mounted on the bottom supporting frame and are movable close to or away from each other; the second drive assembly is installed on the gripping frame; the second drive assembly is configured to drive the bottom supporting frame to move in the Z-axis direction; the third drive assembly is installed on the bottom supporting frame; the third drive assembly is configured to drive the bottom supporting plate to move.

7. The battery cell transfer device according to claim 6, wherein an end of the partition plate is formed as a fixed end, an opposite end of the partition plate is formed as a guide end, the fixed end is fixedly connected to the bottom supporting plate, the guide end is provided with a guide slope, and the guide slope gradually inclines outward from a portion close to the fixed end to a portion away from the fixed end.

8. The battery cell transfer device according to claim 6, wherein the second drive assembly comprises a drive member and a linkage mechanism, the linkage mechanism comprises a connecting seat, a first driving arm, and a second driving arm, the connecting seat is slidably mounted on the gripping frame; the drive member is configured to drive the connecting seat to slide in a Y-axis direction; the first driving arm and the second driving arm are cross-hinged; an end of the first driving arm is hinged to the connecting seat, an opposite end of the first driving arm is hinged to the bottom supporting frame; an end of the second driving arm is hinged to the gripping frame, an opposite end of the second driving arm is hinged to the bottom supporting frame and is slidable in the Y-axis direction.

9. The battery cell transfer device according to claim 8, wherein two linkage mechanisms are provided; the drive member comprises a drive motor, a lead screw, a first nut, and a second nut, the lead screw is arranged along the Y-axis direction; the lead screw has a first threaded section and a second threaded section, the first threaded section and the second threaded section have opposite thread directions; the first nut is threadedly sleeved on the first threaded section and is connected to the connecting seat of one linkage mechanism; the second nut is threadedly sleeved on the second threaded section and is connected to the connecting seat of the other linkage mechanism.

10. The battery cell transfer device according to any one of claims 1 to 5, wherein the battery cell transfer device further comprises a movable track, the movable track extends along the Y-axis direction, and the movable frame is slidably mounted on the movable track.

11. The battery cell transfer device according to any one of claims 1 to 5, wherein the battery cell transfer device further comprises a fourth drive assembly, a guide rail is provided on the gripping frame, a guide groove is provided on the cargo platform, the guide rail is slidably inserted in the guide groove; the fourth drive assembly is configured to drive the guide rail to slide relative to the guide groove.
